# EUROPEAN PATENT APPLICATION

(11) **EP 2 308 290 A1**
(43) Date of publication of application: **13.04.2011**
(21) Application number: 10013460.0
(22) Date of filing: 08.10.2010
(51) Int. Cl.: A01M 23/18

(54) **Trap for catching living animals, such as wild boars**

(30) Priority: 12.10.2009 SE 0901311
(71) Applicant: Hansson, Göran, 360 24 Linneryd (SE)
(72) Inventor: Hansson, Göran, 360 24 Linneryd (SE)
(74) Representative: Lundquist, Arne

(57) **Abstract**

Trap for catching living animals, such as wild boars is described. It comprises a house with a bottom (4) with at least one door (3) turnable around an axis (27) between an open first position and a closed second position. An activating element in the form of a plate (5) is situated at the end of the bottom, opposite to the door.

The trap for catching living animals is especially characterized in, that the door in its open first position is in a substantially horizontal low position, whereas at least one power means comprising a load (43) is arranged to release, at the entrance of the animal at the plate (5), by the aid of same via a first connection element (10) acting at a lock means (41), said power means, the force of which, via a second connection element (19) brings the door (3) to turn from the open first position to the second closed, substantially vertical position.

## Description

### Introduction

The present invention relates to a trap for catching living animals, such as wild boars, comprising a house with a bottom and with at least one door turnable around a first axis between an open first position and a closed second position, whereas an activating element in the form of a plate is situated at the end of the bottom, opposite to the door.

The quickly growing family of wild boars in Sweden and in other countries demands safe traps for catching living animals, as the animals cannot normally be fought with weapons for reducing the family. The traps must be safe for the person to adapt them and imply mild catching of the animals. There is thus an extensive demand for a trap for catching living animals of the art mentioned with a minor risk for the environment, the apting person and which means mild catching.

### Disclosure of the invention

According to the invention, such a trap is characterised primarily in that the door in its first open position is in a substantially horizontal low position, whereas at least one power means comprising a load is arranged to release, at the entrance of the animal at the plate, by the aid of same via a first connection element acting at a lock means, said power means, the force of which, via a second connection element brings the door to turn from the open first position to the second closed, substantially vertical position. Other features of the trap for catching living animals according to the invention are evident from the enclosed patent claims.

### Disclosure of one embodiment of trap for catching living animals according to the invention

The invention shall in the following be disclosed more in detail, related to one embodiment of the trap for catching living animals, reference being made to the enclosed schematic figures and a list of details. Here are shown:
figure 1 a side view of a trap, adapted
figure 2 a side view of the lock means 17 with the load 43 in an adapted position,
figure 3 a view from above of a lock means with two load keeping elements 41,41A,
figure 4 a side view of a first link arm 33 meeting a load 43 for coupling,

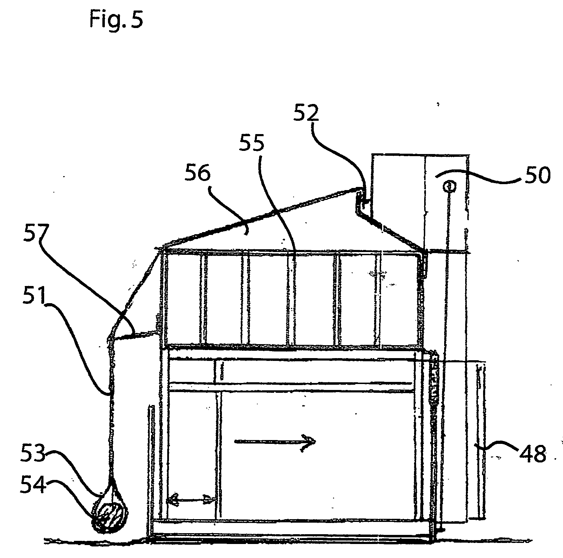

figure 5 a front view with fastening for a protective sheet,
figure 6 a side view with a protective sheet covering a door,

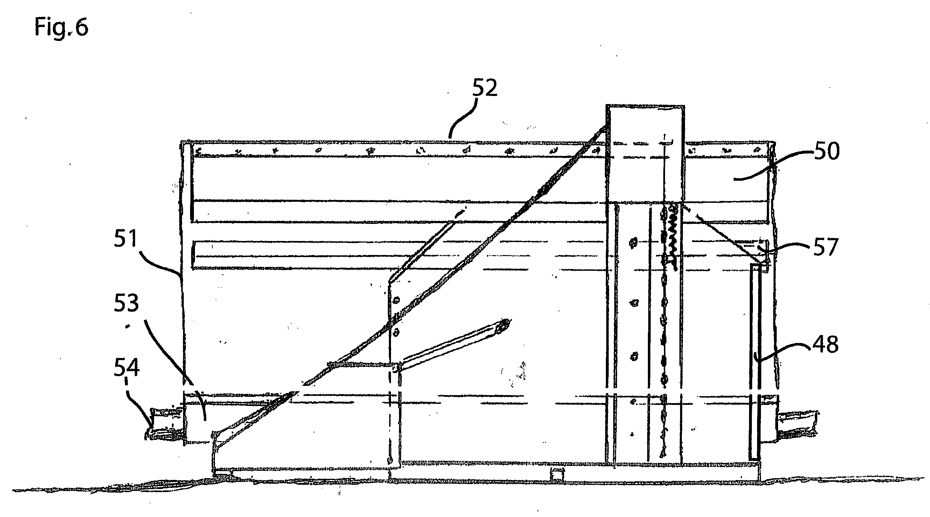

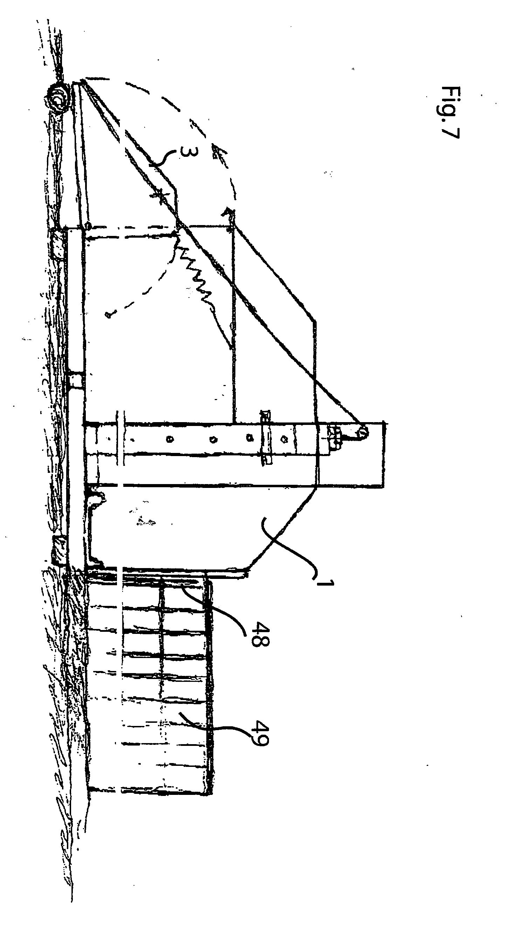

figure 6 a side view with a sluice and net cage.

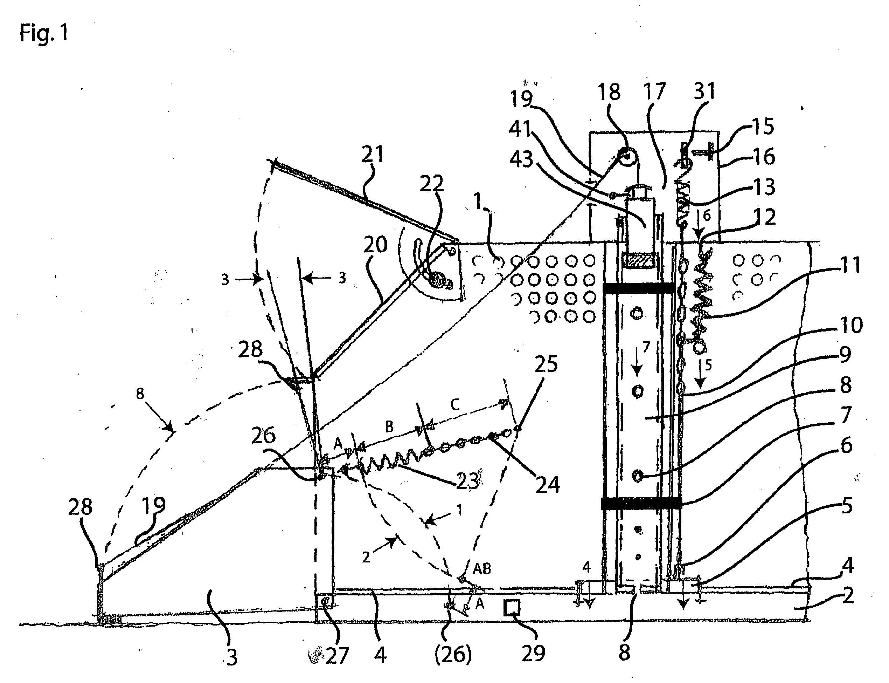

In figure 1 there is shown a house with a bottom 4 with a door 3 turnable around a first axis 27 between an open first position and a closed second position. An activating element in the form of a plate 5 is situated at the end of the bottom, opposite to the door. The door may in its open first position take a substantially horizontal low position. A power means comprising a load 43 is arranged to release, at the entrance of the animal at the plate 5, by the aid of same via a first connection element 10, here in the form of a wire and a chain, acting at a lock means 41, said power means, the force of which, via a second connection element 19, here in the form of a wire, brings the door (3 to turn from the open first position to the second closed, substantially vertical position.

The power means comprises a tower 7, which at its lower portion is formed like a brake cylinder 9 guiding the load 43 with a certain air intermediate room. The brake cylinder 9 is provided with a number of drain holes 8, the opening areas of which decrease as the drain holes 8 are placed closer in relationship to the bottom of the tower 7.

A discharge spring 11 is provided to discharge the load, that is needed for release of the plate 5, preferably to 5 à 150 Newton.

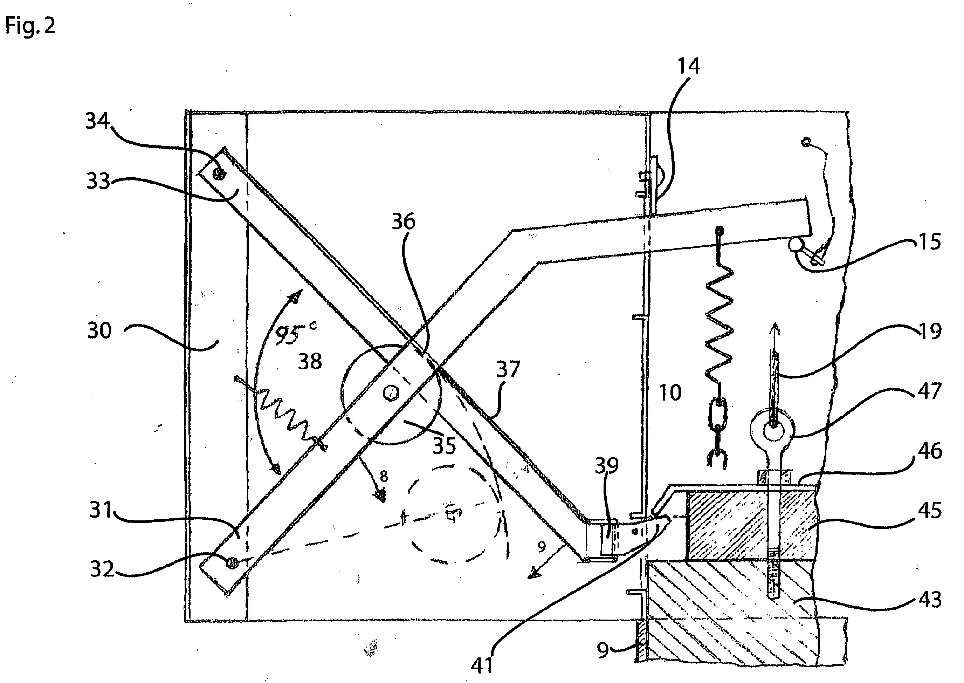

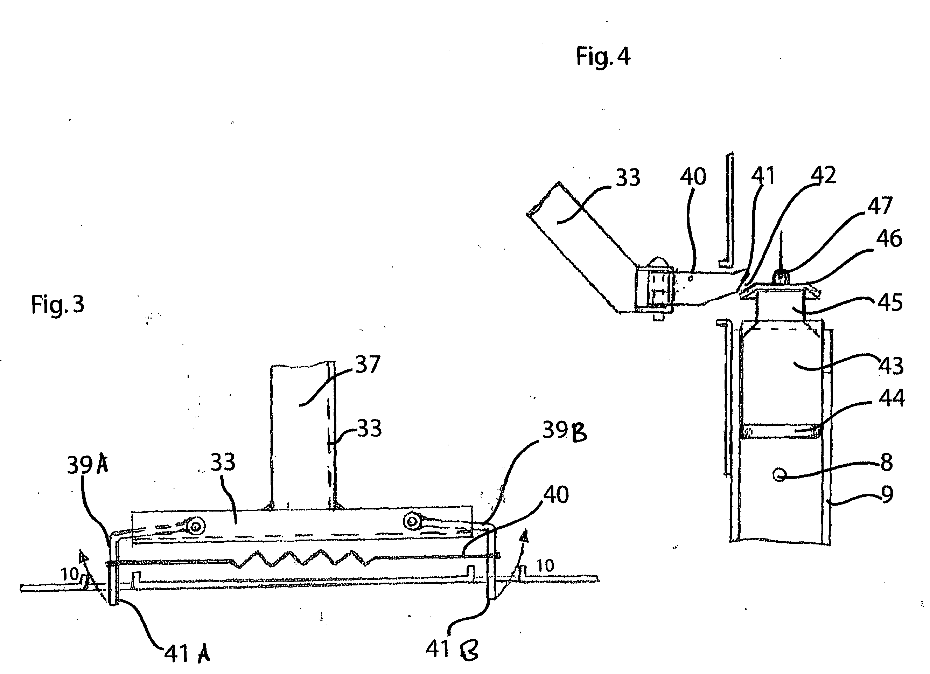

According to figures 2 and 4 the lock means 17 consists of a first link arm in the form of load keeping arm 33 at its upper end turnable around a second axis 34, at its lower end formed like a first lock element in the form of a swingable load keeper, cooperating with, and in a first position locking a second lock element in the form of a coupling upper part 46, which is in connection with the load 43, whereas a second link arm, that is to say release arm 31 is arranged turnable around a third axis 32 arranged substantially vertically below the first axis 34 such that the first and second link arms in a first position substantially cross each other, whereas thin this case in the form of a wheel, supports the first link arm 33 to take its first position, locking the second lock element 46, whereas the second link arm 31 via said connection element 10 acted upon by the activating element, that is to say the plate 5 releases the second link arm 31 releases the second lock element 46 that is to say the coupling upper portion.

In the embodiment of the trap for catching living animals shown the door 3 is provided with side portions and that at least one force means 23,24 is fastened at a fastening point at the side of the house, such that it exerts, in the first open position of the door, a certain drawing force at the back, upper point 26 of one of the side portions in closing direction of the door 3 whilst the force means in the closed position of the door exerts a certain drawing force at said point 26.

The trap is adapted by lifting up the load till its locked position, whereby the door is turned down till its first horizontal position. When an animal enters the trap and goes on the plate the load 43 is released and draws up the door 5 to a closed position and is locked.

In one alternative embodiment the house is provided with a reversed house half, whereas 2 doors 3,3A are provided. Two towers 7,7A are provided with a common lock means 41A, see figure 3, which is arranged to admit two loads to be kept, independently of each other, by a lock means with two load keeping elements 41,41A, which each by itself can take two positions, but can be released simultaneously.

In one further embodiment, the house is provided, at the end opposite to the door, with a sluice gate 48 leading to a net cage 49, preferably without a floor, standing at a sand bed.

Other details of interest can be seen in the position list.

### Position list

| | |
|---|---|
| 1. | trap |
| 2. | trap support |
| 3. | door, 3A door |
| 4. | bottom |
| 5. | plate |
| 6. | fastening point for drawing link |
| 7. | tower, 7A tower |
| 8. | drain hole |
| 9. | brake cylinder |
| 10. | connecting element |
| 11. | discharge spring |
| 12. | discharge fastening point |
| 13. | release spring |
| 14. | release set |
| 15. | safety pin |
| 16. | safety cover |
| 17. | lock means |
| 18. | breaking wheel |
| 19. | second connection means |
| 20. | grate for ventilation and killing |
| 21. | moveable protecting cap |
| 22. | tensing wheel |
| 23. | force means |
| 24. | force means |
| 25. | back fastening point for 23,24 |
| 26. | upper fastening point for 23,24 |
| 27. | first axis |
| 28. | catch |
| 29. | fastening for transport wheel |
| 30. | support for 17 |
| 31. | second link arm, release arm |
| 32. | third axis |
| 33. | first link arm, load keeping arm |
| 34. | second axis |
| 35. | wheel |
| 36. | rolling contact point |
| 37. | the rolling path of the wheel |
| 38. | return spring |
| 39. | 39A load keeper |
| 40. | tensile spring |
| 41. | lock means, 41A common lock means, load keeping elements |
| 42. | meeting point |
| 43. | load |
| 44. | packing |
| 45. | neck |
| 46. | second load element, coupling upper portion |
| 47. | fastening point |
| 48. | sluice door |
| 49. | net cage |
| 50. | extra plates |
| 51. | protective coat |
| 52. | fastening of 51 |
| 53. | pocket in 51 for second load |
| 54. | second load |
| 55. | net roof |
| 56. | air space |
| 57. | distance plate |

### Letters

A extension for discharge
B force element
C link wire, easily bendable
AB point
A between AB and 26 is the braking path for the door

### Arrows

1. the movement of the sides of the door
2. the movement of point AB
3. the soft braking of the door
4. the movement of the plate
5. the movement of the lifting spring at overload
6. spring movement with safe pin in place
7. the movement of the load
8. the movement of release arm 31
9. the movement of load keeping arm 33
10. the spring movement of load keeper 39,39A

## Claims

1. Trap for catching living animals, such as wild boars, comprising a house with a bottom (4) and with at least one door (3) turnable around a first axis (27) between an open first position and a closed second position, whereas an activating element in the form of a plate (5) is situated at the end of the bottom, opposite to the door,
**characterized in,**
**that** the door in its open first position is in a substantially horizontal low position, whereas at least one power means comprising a load (43) is arranged to release, at the entrance of the animal at the plate (5), by the aid of same via a first connection element (10) acting at a lock means (41), said power means, the force of which, via a second connection element (19) brings the door (3) to turn from the open first position to the second closed, substantially vertical position.

2. Trap for catching living animals according to claim 1,
**characterized in,**
**that** the power means comprises a tower (7) which in its lower portion is formed like a brake cylinder (9) guiding the load (43) with a certain air intermediate room, whereas the brake cylinder (9) is provided with a number of drain holes (8) the opening areas of which decrease as the drain holes (8) are placed closer in relationship to the bottom of the tower (7).

3. Trap for catching living animals according to claim 1 or 2,
**characterized in,**
**that** a discharge spring (11) is provided to discharge the load, that is needed for release of the plate (5), preferably to 5 à 150 Newton.

4. Trap for catching living animals according to any of claims 1 to 3, **characterized in,**
**that** the lock means (41) consists of a first link arm in the form of load keeping arm (33), at its upper end turnable around a second axis (34) its lower end formed like a first lock element in the form of a swingable load keeper (39) cooperating with, and in a first position locking a second lock element in the form of a coupling upper part (46), which is in connection with the load (43), whereas a second link arm, that is to say release arm (31) is provided turnable around a third axis (32) arranged substantially vertically below the second axis (34) such that the first and second link arms in a first position, substantially cross each other, whereas the second link arm (31) in this first position via a contact element, preferably in the form of a wheel, supports the first link arm (33) to take its first position, locking the second lock element (46), whereas the second link arm (31) via said connection element (10) acted upon by the activating element, that is to say the plate (5) releases the second link arm (31) to release, by turning downwards, of the first link arm such that the load keeping element (41) releases the second lock element (46) that is to say the coupling upper portion.

5. Trap for catching living animals according to any of claims 1 to 4, **characterized in,**
**that** the door (3) is provided with side portions and that at least one force means (23,24) is fastened at a fastening point at the side of the house, such that it exerts, in the first open position of the door, a certain drawing force at the back, upper point (26) of one of the side portions in closing direction of the door (3), whilst the force means (23,24) in the closed position of the door exerts a certain drawing force at said point (26).

6. Trap for catching living animals according to any of claims 1 to 5, **characterized in,**
**that** the house is provided with a reversed house half, whereas 2 doors (3,3A) are provided, whereas two towers (7,7A) are provided with a common lock means (41A), which is arranged to admit two loads to be kept, independently of each other, by a lock means with two load keeping elements (41,41A), which each by itself can take two positions, but can be released simultaneously.

7. Trap for catching living animals according to any of claims 1 to 5, **characterized in**,
the house is provided, at the end opposite to the door (3), with a sluice gate (48) leading to a net cage (49), preferably without a floor, standing at a sand bed.
